# EUROPÄISCHE PATENTSCHRIFT

(11) **EP 1 249 589 B1**
(45) Veröffentlichungstag und Bekanntmachung des Hinweises auf die Patenterteilung: **19.05.2004**
(21) Anmeldenummer: 02005159.5
(22) Anmeldetag: 08.03.2002
(51) Int. Cl.: F02B 37/18

(54) **Verfahren und Vorrichtung zur Funktionsprüfung eines Bypasselements**
Method and device for the functional verification of a by-pass element
Procédé et dispositif pour la vérification fonctionelle d'un élément de by-pass

(30) Priorität: 14.04.2001 DE 10118675
(43) Veröffentlichungstag der Anmeldung: 16.10.2002
(73) Patentinhaber: AUDI AG, 85045 Ingolstadt (DE)
(72) Erfinder: Kuwatsch, Siegbert, 85051 Ingolstadt-Zuchering (DE); Zeilbeck, Andreas, 85092 Kösching (DE); Gleim, Jörg, 85092 Kösching (DE)
(74) Vertreter: Thielmann, Frank

(56) Entgegenhaltungen:
- US-A- 5 408 979
- US-A- 5 447 031
- US-A- 5 497 751
- PATENT ABSTRACTS OF JAPAN vol. 010, no. 265 (M-515), 10. September 1986 (1986-09-10) & JP 61 087928 A (TOYOTA MOTOR CORP), 6. Mai 1986 (1986-05-06)
- PATENT ABSTRACTS OF JAPAN vol. 1996, no. 04, 30. April 1996 (1996-04-30) & JP 07 332072 A (TOYOTA MOTOR CORP), 19. Dezember 1995 (1995-12-19)

## Beschreibung

Die Erfindung betrifft ein Verfahren und eine Vorrichtung zur Funktionsprüfung eines Bypasselements für eine Brennkraftmaschine nach Anspruch 1 und Anspruch 11.

Zur Steigerung der Motorleistung von Brennkraftmaschinen werden häufig Abgasturbolader eingesetzt. Hierbei wird auf der Auslassseite der Brennkraftmaschine der Abgasstrom über eine Abgasturbine geleitet, die einen Verdichter auf der Einlassseite der Brennkraftmaschine antreibt.

Der Abgasstrom kühlt dabei beim Durchgang über die Abgasturbine u.a. aufgrund der Arbeitsleistung und des erhöhten Wärmeübergangs ab. Im normalen Betrieb der Brennkraftmaschine ist dies erwünscht, nicht jedoch während des Startvorgangs der Brennkraftmaschine. Hier ist ein vorrangiges Ziel die schnelle Aufheizung eines dem Abgasturbolader nachgeschalteten Abgaskatalysators, damit dieser seine Mindesttemperatur, ab der die Abgaskonvertierung einsetzt, so rasch wie möglich erreicht.

Hierzu sind in Brennkraftmaschinen unter anderem Bypassleitungen, im folgenden auch Bypässe genannt, vorgesehen, wobei die Abgasmenge, die durch einen Bypass strömt, über Bypasselemente gesteuert wird. Die Bypasselemente können dazu dienen, den Abgasstrom zumindest teilweise an der Abgasturbine vorbeizuleiten, um unter anderem, insbesondere in der Startphase der Brennkraftmaschine, ein Abkühlen des Abgases an dieser Turbine zumindest für eine gewisse Zeit zu verhindern oder zu verringern und so ein schnelleres Aufheizen des Abgaskatalysators zu bewirken.

Da das Bypasselement somit Einfluss auf das Aufwärmverhalten des Abgaskatalysators hat, muss dessen Funktionsfähigkeit überprüft werden. Zu diesem Zweck ist beispielsweise in DE 198 34 762 ein Verfahren zur Prüfung der Funktionsfähigkeit eines Bypasselements für eine Brennkraftmaschine beschrieben, bei dem der Ladedruck eines Abgasturboladers überwacht und eine Ladedruckänderung beim kurzzeitigen Öffnen des Bypasselements erfasst wird. Bleibt dabei die Ladedruckänderung unterhalb eines vorgegebenen Grenzwerts, so wird auf eine Fehlfunktion des Bypasselements geschlossen.

Dieses Verfahren weist den Nachteil auf, dass die Funktionsfähigkeit des Bypasselements mittels Messwerten bestimmt wird, die nicht in unmittelbarer Umgebung des Bypasselements erfasst werden. Durch die räumliche und apparative Trennung des Bypasselements und des Messorts der Vergleichsdaten, bestehen eine Vielzahl von Einflüssen, die die Messwerte verändern können. So kann ein verringerter Ladedruck durch undichte Stellen an Leitungen verursacht sein und kann damit nicht ohne weiteres als Aussage über die Funktionsfähigkeit des Bypasselements verwendet werden. Darüber hinaus sind durch diese Erfassung von Daten, die an einer von dem Bypasselement örtlich getrennten Stelle aufgenommen werden, die Einsatzmöglichkeiten des Verfahrens beschränkt. Beispielsweise wird bei Brennkraftmaschinen mit V-Bauart an den Abgaskrümmern jeder der Zylinderreihen üblicherweise ein eigener Abgasturbolader vorgesehen, deren Verdichterteile die Ansaugluft jedoch in eine für beide Zylinderreihen gemeinsame Sauganlage fördern. Bei einer solchen Bauweise kann eine Druckänderung in der Ladeluftleitung somit durch eine Fehlfunktion einer der beiden, in einem solchen Fall vorgesehenen Bypasselemente hervorgerufen sein, wobei eine Aussage darüber, welches Element defekt ist, nicht möglich ist.

Eine denkbare direkte Überprüfung der mechanischen Bewegung des Bypasselements mit einem Weg- oder Winkelaufnehmer würde einen erheblichen Montageaufwand und erhebliche Kosten verursachen. Darüber hinaus würde das Gewicht des Fahrzeugs unnötig erhöht. Es wäre bei einer solchen Überprüfung zudem auch nicht möglich, die tatsächlich von dem Bypasselement in den Bypass geleitete Abgasmenge zu bestimmen, da die Öffnung einer Klappe oder eines Ventils gegebenenfalls durch Verunreinigungen verstopft sein kann. In diesem Fall würden die Weg- oder Winkeldaten, die gemessen wurden, keine Aussage darüber zulassen, ob und wieviel Abgas in den Bypass gelangt ist.

Aufgabe der vorliegenden Erfindung ist es daher, ein Verfahren und eine Vorrichtung zur Funktionsprüfung eines Bypasselements für eine Brennkraftmaschine zu schaffen, die flexibel eingesetzt werden können und mittels derer bei geringem konstruktivem Aufwand eine zuverlässige Aussage über die Funktionsfähigkeit des Bypasselements getroffen werden kann.

Der Erfindung liegt die Erkenntnis zugrunde, dass die Funktionsfähigkeit einer Bypassklappe durch Messung einer für die Abgasmenge in dem Bypass repräsentativen Größe in dem Bypass überprüft werden kann.

Diese Aufgabe wird erfindungsgemäß durch ein Verfahren zur Funktionsprüfung mindestens eines Bypasselements gelöst, das den Abgasstrom einer Brennkraftmaschine über die Abgasturbine eines Abgasturboladers und einen diese ungehenden Bypass regelt, wobei das Verfahren zumindest die Schritte des Öffnens des Bypasselements, der Messung der Abgastemperatur in dem Bypass und der Verarbeitung der Messdaten zur Erkennung von Fehlfunktionen umfasst.

Die Messung der Temperatur in dem Bypass, der im folgenden auch als Bypassleitung bezeichnet wird, lässt eine zuverlässige Auskunft darüber, ob Abgas in den Bypass gelangt, zu. Darüber hinaus ist die Temperatur in einer Leitung leicht zu messen, so dass auch der für das Verfahren notwendige konstruktive Aufwand gering gehalten werden kann. Schließlich kann mit dem erfindungsgemäßen Verfahren verhindert werden, dass Einflüsse, die von anderen Bestandteilen der Brennkraftmaschine hervorgerufen werden, zu einer Fehlinterpretation der Messergebnisse führen.

Vorzugsweise werden bei dem erfindungsgemäßen Verfahren die in dem Schritt der Temperaturmessung des Abgases erhaltenen Messdaten mit vorgegebenen Daten verglichen. Diese Vergleichsdaten können beispielsweise die Daten eines vorgegebenen Temperaturmodells darstellen. Bei einem solchen Temperaturmodell können über einen bestimmten Algorithmus weitere Prozessbedingungen, wie beispielsweise die Umgebungstemperatur, berücksichtigt werden. Es ist bevorzugt, die in einem Temperaturmodell erhaltenen Daten mit einem gewissen Toleranzband zu umgeben und nur bei einer Abweichung eines gemessenen Wertes über dieses Toleranzband hinaus von einer Fehlfunktion des Bypasselements auszugehen.

In einer anderen Ausführungsform des erfindungsgemäßen Verfahrens ist es möglich, aus den erhaltenen Messdaten einen Temperaturgradienten über einen vorgegebenen Zeitraum zu ermitteln und diesen mit einem vorgegebenen Temperaturgradienten zu vergleichen. Dieses Verfahren weist den Vorteil auf, dass Temperaturschwankungen, die in dem Rohr, das zu der Abgasturbine und dem Bypass führt, auftreten, unmittelbar berücksichtigt werden können.

In einer weiteren Ausführungsform erfolgt eine elektrische Überwachung des Temperatursensors, der die Temperaturmessung in dem Bypass ausführt. Dies wird durch eine Endstufendiagnose im Steuergerät und durch eine Plausibilisierung mit der Motorstarttemperatur erreicht.

Ist die Temperaturerhöhung in dem Bypass durch das reine Umschalten des Bypasselements auf eine geöffnete Position nicht ausreichend, um ein Temperaturniveau zu erreichen, in dem der verwendete Temperatursensor zuverlässige Messdaten liefert, so kann nach einer Ausführungsform des erfindungsgemäßen Verfahrens die Temperatur des Abgases durch Einstellung vorgegebener Prozessparameter erhöht werden. Insbesondere kann die Einstellung des Zündwinkels auf einen geeigneten Wert zu diesem Zweck dienen.

Die in dem Bypass gemessenen Daten können erfindungsgemäß an ein Steuergerät weitergeleitet werden, wo diese verarbeitet werden. In einem solchen Steuergerät können die Messdaten gespeichert werden. Es können weitere Werte aufgrund dieser Daten ermittelt werden und es können Vergleiche mit Vergleichsdaten, z.B. aus Temperaturmodellen durchgeführt werden.

Erkennt das Steuergerät als Resultat der Verarbeitung der Messdaten eine Fehlfunktion, kann diese als Fehler in einem Speicher des Steuergeräts ablegt werden. Somit können sämtliche auftretenden Fehler in dem Speicher gesammelt werden und bei einer Inspektion des Fahrzeuges ausgelesen werden. Dies ermöglicht es auch, gesetzlichen Vorschriften, wie (OBDII), gerecht zu werden, nach der abgasrelevante Bauteile, zu denen das Bypasselement wegen seines Einflusses auf den Abgaskatalysator gezählt werden muss, überprüft werden müssen.

Alternativ zu einer Speicherung von Fehlermeldungen in einem Steuergerät oder zusätzlich dazu kann das Steuergerät beim Erkennen einer Fehlfunktion ein Warnlicht ansteuern. Dadurch wird der Fahrer des Fahrzeuges unmittelbar auf den Defekt aufmerksam und kann diesen schnellstmöglich in einer Werkstatt beheben lassen.

Die Erfindung betrifft weiterhin eine Vorrichtung zur Funktionsprüfung eines Bypasselements, das den Abgasstrom einer Brennkraftmaschine über die Abgasturbine eines Abgasturboladers und einen diese ungehenden Bypass regelt, wobei die Vorrichtung zumindest einen Temperatursensor umfasst, der in den Bypass eingebaut ist.

Vorzugsweise ist der Temperatursensor unmittelbar hinter dem Bypasselement angeordnet. Durch diese Nähe des Sensors zu der Bypassklappe kann die Zeit über die die Bypassklappe geöffnet werden muss, um eine Überprüfung deren Funktionsfähigkeit ausführen zu können, gering gehalten werden. Allerdings muss die Position des Temperatursensors so gewählt werden, dass dieser einen repräsentativen Wert der Temperatur in dem Bypass wiedergeben kann und eventuell entstehende Turbulenzen den Temperatursensor nicht beeinflussen.

Vorzugsweise ist der Temperatursensor mit einer Steuereinheit verbunden, die insbesondere durch das Steuergerät dargestellt werden kann, das auch die Betätigung des Bypasselements steuert. Durch diese Verbindung kann das Vorsehen eines separaten Steuergerätes für die Ansteuerung des Temperatursensors und die Verarbeitung der durch diesen erfassten Daten entfallen. Weiterhin können so, beispielsweise bei der Verarbeitung der Daten durch Vergleich mit einem Temperaturmodell, die aktuellen Zustände der Bypassklappe unmittelbar in den Algorithmus des Temperaturmodells einbezogen werden, ohne weitere Verbindungen zwischen Steuergeräten vorsehen zu müssen.

Das Bypasselement kann in der erfindungsgemäßen Vorrichtung durch eine Bypassklappe oder ein Bypassventil gebildet werden.

Die Erfindung wird im Folgenden anhand der beiliegenden Zeichnung, die ein Ausführungsbeispiel der Erfindung darstellt, beschrieben.

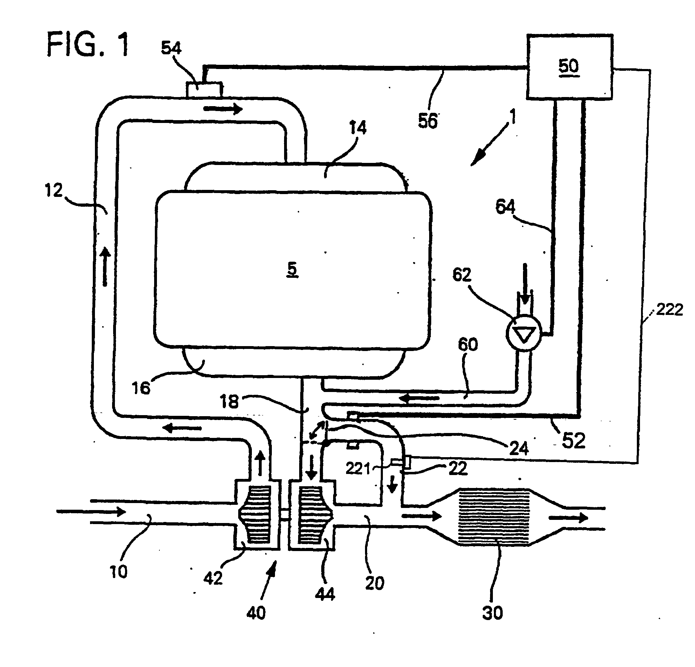

Figur 1 zeigt eine schematische Darstellung einer Ausführungsform der erfindungsgemäßen Vorrichtung an einer Brennkraftmaschine mit einem Bypasselement.

In Figur 1 ist eine Brennkraftmaschine 1 eines Kraftfahrzeugs dargestellt, die einen Motor 5 umfasst. Auf der Einlassseite des Motors 5 ist ein Verteiler 14 vorgesehen, in den über eine Ladeluftleitung 12 und einen Verdichter 42 eines Abgasturboladers 40 durch eine Ansaugleitung 10 Luft eingesogen wird. Auslassseitig weist der Motor 5 einen Abgaskrümmer 16 auf, der über ein Rohr 18 mit der Abgasturbine 44 des Abgasturboladers 40 verbunden ist. An die Abgasturbine 44 schließt sich eine Abgasleitung 20 an, die zu einem Abgaskatalysator 30 führt, der auslassseitig mit weiteren Komponenten eines Auspuffsystems verbunden sein kann. In das Rohr 18, das den Abgaskrümmer 16 mit der Abgasturbine 44 oder einer Bypassleitung 22 verbindet, mündet eine Sekundärluftleitung 60, die über ein Sekundärluftventil 64 Frischluft in das System bringen kann. Das Sekundärluftventil 62 kann mit dem Steuergerät 50 verbunden und durch dieses gesteuert werden. Vorzugsweise ist dieses Steuergerät 50 weiterhin mit einem Ladedrucksensor 54 verbunden, der an der Ladeluftleitung 12 vorgesehen ist. Durch diese Verbindung können die Druckverhältnisse in der Ladeluftleitung 12 erfasst werden und bei Bedarf Steuerungsmaßnahmen getroffen werden, um den Druck in der Ladeluftleitung 12 zu erhöhen oder zu senken. Dies kann beispielsweise durch Ansteuern des Bypasselements 24, das im folgenden genauer beschrieben wird, geschehen.

Zwischen dem Rohr 18 und der Abgasleitung 20 ist die Bypassleitung bzw. der Bypass 22 vorgesehen, über den eine direkte Verbindung zwischen dem Rohr 18 und der Abgasleitung 20, unter Umgehung der Abgasturbine 44, hergestellt werden kann. Zu diesem Zweck, d.h. zur Steuerung der Abgasmenge, die in die Bypassleitung 22 oder zu der Abgasturbine 44 geführt werden soll, ist in der Bypassleitung 22 ein Bypasselement 24 vorgesehen. Dieses ist über eine Steuerleitung 52 mit dem Steuergerät 50 verbunden. In der dargestellten Ausführungsform ist das Bypasselement durch eine Klappe 24 gebildet. Es kann aber statt dessen auch beispielsweise ein Ventil zum Einsatz kommen.

Bei der erfindungsgemäßen Vorrichtung ist, wie in der Figur gezeigt, in der Bypassleitung 22 ein Temperatursensor 221 vorgesehen. Dieser erstreckt sich vorzugsweise mindestens bis zu der radialen Mitte der Bypassleitung 22, um einen über den Querschnitt der Bypassleitung 22 gegebenenfalls vorliegenden Temperaturunterschied ausgleichen zu können. Als Temperatursensor können alle bekannten Arten von Sensoren für die Temperaturmessung eingesetzt werden. Der Temperatursensor 221 ist über eine Verbindungsleitung 222 mit dem Steuergerät 50 verbunden, über die Daten, die von dem Temperatursensor 221 erhalten werden, an das Steuergerät 50 geleitet werden können. Weiterhin kann die Leitung 222 dazu dienen, dass der Temperatursensor 221 von dem Steuergerät 50 aktiviert wird.

Im folgenden soll nun der Ablauf einer möglichen Ausführungsform des erfindungsgemäßen Verfahrens, das im folgenden auch als Diagnose bezeichnet wird, unter Bezugnahme auf die Figur beschrieben werden.

In einer Ausführungsform wird bei laufendem Motor 5 von dem Steuergerät 50 aus das Verfahren zur Funktionsüberprüfung des Bypasselements gestartet. Hierzu steuert das Steuergerät 50 das Betätigungselement des Bypasselements über die Steuerleitung 52 an. Das Betätigungselement kann vorzugsweise in der dargestellten Weise um die Bypassleitung 22 an der Stelle angebracht sein, an der das Bypasselement 24 in der Bypassleitung 22 angeordnet ist. Über dieses Betätigungselement kann das Bypasselement 24 elektrisch, magnetisch oder auf eine andere bekannte Weise aktiviert, d.h. geöffnet werden. Dadurch wird zumindest ein Teil des Abgasstroms, der den Motor 5 über den Abgaskrümmer 16 und das Rohr 18 verlässt, in die Bypassleitung 22 geleitet.

Der in der Bypassleitung 22 vorgesehene Temperatursensor 221 wird vorzugsweise vor dem Öffnen des Bypasselements 24 aktiviert. Ab diesem Zeitpunkt wird von diesem die Temperatur in der Bypassleitung 22 gemessen. Es liegt aber auch im Rahmen der Erfindung den Temperatursensor 221 ständig eingeschaltet zu haben. Die gemessenen Temperaturdaten werden von dem Temperatursensor 221 über die Steuerleitung 222 an das Steuergerät 50 übermittelt, wo diese verarbeitet werden. Hierzu können die Temperaturdaten mit Daten aus einem in dem Steuergerät 50 abgelegten Temperaturmodell verglichen werden. Ein solches Temperaturmodell wird in der Regel über einen Algorithmus bestimmt, in dem zum einen die bei normalem Betrieb herrschenden Bedingungen in der Anlage, wie z.B. der Luftmassenstrom, aber auch Umgebungsbedingungen, wie die Umgebungstemperatur, berücksichtigt werden und daraus die in der Bypassleitung 22 zu erwartende Temperatur bestimmt werden kann. Diese Temperatur wird für unterschiedliche Zeitpunkte bestimmt und so ein Temperaturmodell erzeugt. Um diese so berechnete Temperaturkurve wird ein Toleranzband gelegt, das den Bereich angibt, innerhalb dessen die Werte noch auf ein funktionsfähiges Bypasselement hinweisen und lediglich insbesondere Meßungenauigkeiten eine Abweichung von den berechneten Daten verursacht haben.

Eine an dem Temperatursensor 221 gemessene und an das Steuergerät 50 weitergeleitete Temperatur wird mit der in dem Temperaturmodell für diesen Zeitpunkt berechneten Temperatur verglichen. Weicht die gemessene von der berechneten Temperatur ab, so wird weiterhin verglichen, ob die gemessene Temperatur in dem durch das Toleranzband definierten Bereich liegt. Ist dies der Fall, so arbeitet das Bypasselement 24 vorschriftgemäß. Vorzugsweise wird dieser Vergleich nicht nur für eine der gemessenen Temperaturdaten durchgeführt, sondern für alle Temperaturdaten, die über einen gewissen Zeitraum von beispielsweise 1 bis 20 Sekunden gemessenen wurden. Hierbei muss sich die aus diesen gemessenen Daten ergebende Temperaturkurve innerhalb der vorgegebenen Zeit innerhalb des Toleranzbandes einschwingen, wenn das Bypasselement 24 vorschriftgemäß arbeitet. Liegt die gemessene Temperaturkurve außerhalb des Toleranzbandes, so arbeitet das Bypasselement 24 nicht vorschriftgemäß. Kommt es beispielsweise zu gar keiner Temperaturerhöhung an dem Temperatursensor 221, so ist das Bypasselement 24 defekt und öffnet nicht.

Nach einer gewissen Zeit, beispielsweise nach 3 Sekunden, wird der Versuchszyklus bzw. Diagnosezyklus beendet, indem das Steuergerät 50 das Bypasselement 24 wieder deaktiviert, d.h. schließt. Liegen zu diesem Zeitpunkt andere Anweisungen für das Steuergerät 50 vor, aufgrund derer dieses das Bypasselement 24 öffnen soll, werden diese natürlich ausgeführt. Solche Anweisungen können durch die Forderung nach einem Heizen des Katalysators hervorgerufen werden.

Wird in dem Steuergerät 50 eine Abweichung der gemessenen von den berechneten Daten unter Berücksichtigung der vorgegebenen Toleranz erkannt, so kann entweder eine Fehlermeldung in dem Steuergerät 50 in einem dafür vorgesehenen Speicher abgelegt werden und/oder ein Warnlicht (MIL=Malfunction Indicator Light) angesteuert werden und/oder ein akustischer Hinweis gegeben werden.

In einer anderen Ausführungsform des Verfahrens wird ebenfalls das Bypasselement 24 geöffnet, die in der Bypassleitung 22 herrschende Temperatur gemessen und an das Steuergerät 50 weitergeleitet. Allerdings wird in dieser Ausführungsform nicht die gemessene Temperatur mit einem Temperaturmodell verglichen, sondern der Temperaturgradient zwischen der Temperatur, die herrscht, wenn das Bypasselement geöffnet wird, und der Temperatur, die nach einer vorgegebenen Zeit gemessen wird, bestimmt. Dieser wird dann mit einem vorgegebenen, vorzugsweise ebenfalls durch einen Algorithmus bestimmten Temperaturgradienten verglichen. Ist der aus den gemessenen Temperaturen bestimmte Temperaturgradient kleiner als der vorgegebene Gradient, so wird wie in dem ersten Ausführungsbeispiel eine Fehlermeldung in dem Steuergerät abgelegt und/oder ein Warnlicht angesteuert und/oder ein akustischer Hinweis gegeben.

Sollte der Wärmeeintrag nur durch das Schalten des Bypasselements nicht ausreichen, so kann zusätzlich noch eine definierte Momentenreserve aufgeschaltet werden. Dadurch kann die Abgastemperatur durch einen späteren Zündwinkel erhöht werden.

Die Funktionsfähigkeit des Temperatursensors kann durch Überprüfung der Temperatur in einem Zustand, in dem das Bypasselement nicht geschaltet, d.h. nicht geöffnet ist, überprüft werden. Hierbei muss die gemessene Temperatur dann in einem Bereich um die nach einem zweiten Temperaturmodell bestimmten Temperatur liegen, bzw. eine gemessene Temperaturkurve in einem Toleranzband, das um eine Modellkurve des zweiten Temperaturmodells liegt, einschwingen.

Das erfindungsgemäße Verfahren kann in jedem Zustand des Fahrzeuges überprüft werden, wenn der Motor gestartet ist. Es kann also sowohl im Leerlauf, als auch im Fahrbetrieb durchgeführt werden. Die Diagnose wird vorzugsweise in einem stationären Zustand des Motors durchgeführt. Dies ist vorteilhaft, da die Erstellung eines für einen solchen Zustand zutreffenden Modells weniger aufwendig ist, als bei einem Zustand, in dem sich beispielsweise das Drehmoment oder die Drehzahl ändert. Wird eine solche Drehzahl- oder Drehmomentenänderung durch den Fahrer erzeugt, so wird bei bereits gestartetem Diagnosezyklus die Diagnose abgebrochen und zu einem späteren Zeitpunkt wiederholt. Gleiches gilt, wenn die Zeit zum Durchführen der Diagnose im Leerlauf nicht ausreichend ist. Auch dann wird die Diagnose abgebrochen und zu einem späteren Zeitpunkt wiederholt.

## Patentansprüche

1. Verfahren zur Funktionsprüfung eines Bypasselements (24), das den Abgasstrom einer Brennkraftmaschine (1) über die Abgasturbine (44) eines Abgasturboladers (40) und einen diese umgehenden Bypass (22) regelt, wobei das Verfahren zumindest die folgende Schritte umfasst:
a) Öffnen des Bypasselements (24);
b) Messung der Abgastemperatur in dem Bypass (22); und
c) Verarbeitung der Messdaten zur Erkennung von Fehlfunktionen.

2. Verfahren nach einem der Ansprüche 1, **dadurch gekennzeichnet, dass** zur Verarbeitung der erhaltenen Messdaten diese mit vorgegebenen Daten verglichen werden.

3. Verfahren nach einem der Ansprüche 1 oder 2, **dadurch gekennzeichnet, dass** die Messdaten mit den Daten eines vorgegebenen Temperaturmodells verglichen werden.

4. Verfahren nach einem der Ansprüche 1 bis 3, **dadurch gekennzeichnet, dass** zur Verarbeitung der erfassten Messdaten ein Temperaturgradient über einen vorgegebenen Zeitraum ermittelt wird und dieser mit einem vorgegebenen Temperaturgradienten verglichen wird.

5. Verfahren nach einem der Ansprüche 1 bis 4, **dadurch gekennzeichnet, dass** die gemessenen Temperaturdaten elektronisch überwacht werden.

6. Verfahren nach einem der vorstehenden Ansprüche, **dadurch gekennzeichnet, dass** die Temperatur des Abgases durch Einstellung weiterer Prozessparameter erhöht wird.

7. Verfahren nach Anspruch 6, **dadurch gekennzeichnet, dass** die Temperaturerhöhung durch Einstellung des Zündwinkels erzielt wird.

8. Verfahren nach einem der vorstehenden Ansprüche, **dadurch gekennzeichnet, dass** die Messdaten an ein Steuergerät (50) weitergeleitet werden, wo diese verarbeitet werden.

9. Verfahren nach einem der vorstehenden Ansprüche, **dadurch gekennzeichnet, dass** das Steuergerät (50) beim Erkennen einer Fehlfunktion diese als Fehler in einem Speicher des Steuergerätes (50) ablegt.

10. Verfahren nach einem der vorstehenden Ansprüche, **dadurch gekennzeichnet, dass** das Steuergerät (50) beim Erkennen einer Fehlfunktion ein Warnlicht ansteuert und/oder einen akustischen Hinweis gibt.

11. Vorrichtung zur Funktionsprüfung eines Bypasselements (24), das den Abgasstrom einer Brennkraftmaschine (1) über die Abgasturbine (44) eines Abgasturboladers (40) und einen diese umgehenden Bypass (22) regelt, wobei die Vorrichtung zumindest einen Temperatursensor (221) umfasst, der in den Bypass (22) eingebaut ist.

12. Vorrichtung nach Anspruch 11, **dadurch gekennzeichnet, dass** der Temperatursensor (221) unmittelbar hinter dem Bypasselement (24) angeordnet ist.

13. Vorrichtung nach Anspruch 11 oder 12, **dadurch gekennzeichnet, dass** der Temperatursensor (221) mit einer Steuereinheit (50) verbunden ist.

14. Vorrichtung nach Anspruch 13, **dadurch gekennzeichnet, dass** die Steuereinheit das Steuergerät (50) darstellt, das die Betätigung des Bypasselements (24) steuert.

15. Vorrichtung nach einem der Ansprüche 11 bis 14, **dadurch gekennzeichnet, dass** das Bypasselement eine Bypassklappe (24) darstellt.

16. Vorrichtung nach einem der Ansprüche 11 bis 14, **dadurch gekennzeichnet, dass** das Bypasselement ein Bypassventil darstellt.

## Claims

1. Method for functional verification of a bypass element (24) which controls the exhaust gas stream from an internal combustion engine (1) via the exhaust turbine (44) of an exhaust-driven turbocharger (40) and a bypass (22) circumventing said turbine, whereby the method includes at least the following steps:
a) opening the bypass element (24);
b) measuring the exhaust gas temperature in the bypass (22); and
c) processing the measurement data to recognise fault conditions.

2. Method according to Claim 1, **characterised in that** for processing the measurement data received, these are compared with preset data.

3. Method according to one of the claims 1 or 2, **characterised in that** the measurement data are compared with the data from a preset temperature model.

4. Method according to one of the claims 1 to 3, **characterised in that** for processing of the recorded measurement data, a temperature gradient is determined over a given time period and this is compared with a preset temperature gradient.

5. Method according to one of the claims 1 to 4, **characterised in that** the measured temperature data are electronically monitored.

6. Method according to one of the previous claims, **characterised in that** the temperature of the exhaust gas is increased by setting further process parameters.

7. Method according to Claim 6, **characterised in that** the temperature increase is achieved by setting the ignition advance angle.

8. Method according to one of the previous claims, **characterised in that** the measurement data are passed to a control device (50) where they are processed.

9. Method according to one of the previous claims, **characterised in that**, on recognising a fault condition, the control device (50) stores this as an error in a store of the control device (50).

10. Method according to one of the previous claims, **characterised in that** the control device (50) controls a warning light and/or emits an audible signal on recognising a fault condition.

11. Device for functional verification of a bypass element (24) which controls the exhaust gas stream from an internal combustion engine (1) via an exhaust turbine (44) of an exhaust-driven turbocharger (40) and a bypass (22) circumventing said turbine, whereby the device includes at least one temperature sensor (221) built into the bypass (22).

12. Device according to Claim 11, **characterised in that** the temperature sensor (221) is arranged immediately behind the bypass element (24).

13. Device according to Claim 11 or 12, **characterised in that** the temperature sensor (221) is linked to a control unit (50).

14. Device according to Claim 13, **characterised in that** the control unit represents the control device (50) which controls the actuation of the bypass element (24).

15. Device according to one of the claims 11 to 14, **characterised in that** the bypass element represents a bypass flap (24).

16. Device according to one of the claims 11 to 14, **characterised in that** the bypass element represents a bypass valve.

## Revendications

1. Procédé de vérification fonctionnelle d'un élément de dérivation (24), assurant le réglage du débit de gaz d'échappement d'un moteur à combustion interne (1) passant par la turbine de gaz d'échappement (44) d'un turbocompresseur entraîné par les gaz d'échappement (40) et assurant le réglage de dérivation (22) contournant celle-ci, le procédé comprenant au moins les étapes suivantes :
a) ouverture de l'élément de dérivation (24) ;
b) mesure de la température des gaz d'échappement dans la dérivation (22) ; et
c) traitement des données de mesure pour l'identification de défauts de fonctionnement.

2. Procédé selon la revendication 1, **caractérisé en ce que**, pour traiter les données de mesure obtenues, celles-ci sont comparées à des données prédéterminées.

3. Procédé selon l'une des revendications 1 ou 2, **caractérisé en ce que** les données de mesure sont comparées aux données d'un modèle de température prédéterminé.

4. Procédé selon l'une des revendications 1 à 3, **caractérisé en ce que**, pour traiter les données de mesure appréhendées, est déterminé un gradient de température, sur la valeur d'une durée prédéterminée, et celui-ci est comparé à un gradient de température prédéterminé.

5. Procédé selon l'une des revendications 1 à 4, **caractérisé en ce que** les données de température mesurées sont surveillées de façon électronique.

6. Procédé selon l'une des revendications précédentes, **caractérisé en ce que** la température des gaz d'échappement est augmentée par un réglage d'autres paramètres du processus.

7. Procédé selon la revendication 6, **caractérisé en ce que** l'augmentation de température est obtenue par réglage de l'angle d'allumage.

8. Procédé selon l'une des revendications précédentes, **caractérisé en ce que** les données de mesure sont retransmises à un appareil de commande (50), dans lequel elles sont traitées.

9. Procédé selon l'une des revendications précédentes, **caractérisé en ce que** l'appareil de commande (50), en cas d'identification d'un défaut de fonctionnement, l'enregistre en tant que défaut dans une mémoire de l'appareil de commande (50).

10. Procédé selon l'une des revendications précédentes, **caractérisé en ce que** l'appareil de commande (50), en cas d'identification d'un défaut de fonctionnement, commande un affichage lumineux d'avertissement et/ou produit une indication acoustique.

11. Dispositif de vérification fonctionnelle d'un élément de dérivation (24), assurant la régulation du débit de gaz d'échappement d'un moteur à combustion interne (1) passant par la turbine de gaz d'échappement (44) d'un turbocompresseur entraîné par les gaz d'échappement (40) et assurant la régulation d'une dérivation (22) contournant celle-ci, le dispositif comprenant au moins un capteur de température (221), intégré dans la dérivation (22).

12. Dispositif selon la revendication 11, **caractérisé en ce que** le capteur de température (221) est disposé directement derrière l'élément de dérivation (24).

13. Dispositif selon la revendication 11 ou 12, **caractérisé en ce que** le capteur de température (221) est relié à un appareil de commande (50).

14. Dispositif selon la revendication 13, **caractérisé en ce que** l'unité de commande est constituée de l'appareil de commande (50), assurant la commande de l'actionnement de l'élément de dérivation (24).

15. Dispositif selon l'une des revendications 11 à 14, **caractérisé en ce que** l'élément de dérivation est constitué d'un clapet de dérivation (24).

16. Dispositif selon l'une des revendications 11 à 14, **caractérisé en ce que** l'élément de dérivation est constitué par une soupape de dérivation.
